# EUROPEAN PATENT APPLICATION

(11) **EP 2 683 113 A1**
(43) Date of publication of application: **08.01.2014**
(21) Application number: 13003297.2
(22) Date of filing: 28.06.2013
(51) Int. Cl.: H04L 12/12, H04L 12/24

(54) **Energy efficient ethernet power management via SIEPON protocol**

(30) Priority: 06.07.2012 US 201261668731 P; 25.06.2013 US 201313926941
(71) Applicant: Broadcom Corporation, Irvine, CA 92617 (US)
(72) Inventor: Diab, Wael, San Francisco, CA 94109 (US); Lamb, Lowell, San Ramon, CA 94583 (US)
(74) Representative: Jehle, Volker Armin

(57) **Abstract**

Systems and methods are provided to allow a service provider to manage, query, and dynamically configure the protocols on network facing interfaces as well as the devices on that domain where the service provider may be provisioning services using the IEEE P1904.1 Standard for Service Interoperability in Ethernet Passive Optical Networks (SIEPON). Systems and methods are provided for using SIEPON to update an Energy Efficient Ethernet (EEE) configuration of a Customer Premise Equipment (CPE) device and for using SIEPON to gather information from a CPE device.

## Description

### CROSS REFERENCE TO RELATED APPLICATIONS

This application claims the benefit of U.S. Provisional Patent Application Number 61/668,731, filed on July 6, 2012, which is incorporated by reference herein in its entirety.

### FIELD OF THE INVENTION

This invention relates to Energy Efficient Ethernet (EEE) and more specifically to EEE power management.

### BACKGROUND

EPON (Ethernet Passive Optical Network) technology is a leading technology for FTTx (Fiber to the x) access networks. In response to the rapid growth of EPON technology, the market is looking for open, international, system-level specifications that will foster multi-vendor interoperability. This has posed the need for a new standard, and in December 2009, the IEEE Standards Association announced plans to form an IEEE P1904.1 Working Group to develop Standard for Service Interoperability in Ethernet Passive Optical Networks (SIEPON). In part, this group plans to take EPON to the next level - a global level.

The SIEPON standard project aims to develop system-level specifications targeting "plug-and-play" interoperability of the transport, service, and control plane in a multi-vendor environment. The purpose of SIEPON is to build upon the IEEE 802.3ah (1G-EPON) and IEEE 802.3av (IOG-EPON) Physical Layer and Data Link Layer standards and create a system-level and network-level standard, thus allowing full "plug-and-play" interoperability of the transport, service, and control planes in multi-vendor environment.

Energy costs continue to escalate in a trend that has accelerated in recent years. Because of this, various industries have become increasingly sensitive to the impact of those rising costs. One area that has drawn increasing scrutiny is the IT infrastructure. Many companies are now looking at their IT systems' power usage to determine whether the energy costs can be reduced. For this reason, an industry focus on energy efficient networks has arisen to address the rising costs of IT equipment usage as a whole (e.g., PCs, displays, printers, servers, network components, etc.).

Modem networking components are increasingly implementing energy consumption and efficiency (ECE) control mechanisms. Traditional ECE mechanisms, such as power shedding are also being used in networks. Some modem ECE control mechanisms allow physical layer components to enter and exit a low power state. An ECE control policy controls when, and under what circumstances, ECE control enabled physical layer components enter and exit low power states. Device control policies play a key role in maximizing savings while minimizing performance impact on the network.

One example of an ECE control mechanism is the IEEE P802.3az standard, also known as Energy Efficient Ethernet (EEE). Systems and methods are provided to allow a service provider to manage, query, and dynamically configure the protocols on network facing interfaces as well as the devices on a domain where the service provider may be provisioning services using SIEPON.

### BRIEF SUMMARY OF THE INVENTION

According to an aspect, an apparatus comprises:
an interface; and
a Service Interoperability in Ethernet Passive Optical Networks (SIEPON) operation, administration, and management (OAM) client, wherein the SIEPON OAM client is configured to:
   determine an Energy Efficient Ethernet (EEE) control policy setting for a Customer Premise Equipment (CPE) device,
   generate first OAM information based on the EEE control policy setting, and
   transmit the first OAM information to the CPE device over the interface.

Advantageously, the apparatus is implemented on:
an Ethernet Passive Optical Network (EPON),
an EPON over Cable (EPoC) network, or
a Data Over Cable Service Interface Specification (DOCSIS) Provisioning of EPON (DPOE) network.

Advantageously, the EEE control policy setting for the CPE device is a setting to place the CPE device in a sleep mode or a low power mode.

Advantageously, the SIEPON OAM client is implemented on an optical line terminal (OLT).

Advantageously, the SIEPON OAM client is further configured to:
receive a recommendation to enter a sleep mode or a low power mode;
update a control policy based on the recommendation;
generate second OAM information based on the updated control policy; and
transmit the second OAM information to the CPE device over the interface.

Advantageously, the SIEPON OAM client is further configured to:
periodically receive the recommendation to enter the sleep mode or the low power mode;
periodically update the control policy based on the recommendation;
periodically generate the second OAM information based on the updated control policy; and
periodically transmit the second OAM information to the CPE device over the interface.

According to an aspect, a system comprises:
a Service Interoperability in Ethernet Passive Optical Networks (SIEPON) operation, administration, and management (OAM) client; and
a network power manager (NPM), wherein the NPM is configured to:
   determine an Energy Efficient Ethernet (EEE) control policy setting for a Customer Premise Equipment (CPE) device, and
   instruct the SIEPON OAM client to generate first OAM information based on the EEE control policy setting.

Advantageously, the system further comprises:
an optical network unit (ONU), wherein the ONU is configured to receive the first OAM information and to transmit the first OAM information to the CPE device.

Advantageously, the EEE control policy setting for the CPE device is a setting to place the CPE device in a sleep mode or a low power mode.

Advantageously, the system is implemented on:
an Ethernet Passive Optical Network (EPON),
an EPON over Cable (EPoC) network, or
a Data Over Cable Service Interface Specification (DOCSIS) Provisioning of EPON (DPOE) network.

Advantageously, the NPM is further configured to:
receive a recommendation to enter a sleep mode or a low power mode;
update a control policy based on the recommendation;
generate second OAM information based on the updated control policy; and
transmit the second OAM information to the CPE device.

Advantageously, the NPM is further configured to:
periodically receive the recommendation to enter the sleep mode or the low power mode;
periodically update the control policy based on the recommendation;
periodically generate the second OAM information based on the updated control policy; and
periodically transmit the second OAM information to the CPE device.

According to an aspect, a method comprises:
determining an Energy Efficient Ethernet (EEE) control policy setting for a Customer Premise Equipment (CPE) device;
generating, using a Service Interoperability in Ethernet Passive Optical Networks (SIEPON) operation, administration, and management (OAM) client, first OAM information based on the EEE control policy setting; and
transmitting the first OAM information to the CPE device.

Advantageously, the SIEPON OAM client is implemented on an optical line terminal (OLT).

Advantageously, a network power manager (NPM) determines the EEE control policy setting.

Advantageously, transmitting the first OAM information to the CPE device further comprises transmitting the first OAM information to an optical network unit (ONU), wherein the ONU receives the first OAM information and transmits the first OAM information to the CPE device.

Advantageously, the EEE control policy setting for the CPE device is a setting to place the CPE device in a sleep mode or a low power mode.

Advantageously, the method further comprises:
receiving a recommendation to enter a sleep mode or a low power mode;
updating a control policy based on the recommendation;
generating second OAM information based on the updated control policy; and
transmitting the second OAM information to the CPE device over the interface.

Advantageously, a network power manager (NPM) updates the control policy based on the recommendation.

Advantageously, the method further comprises:
periodically receiving the recommendation to enter the sleep mode or the low power mode;
periodically updating the control policy based on the recommendation;
periodically generating the second OAM information based on the updated control policy; and
periodically transmitting the second OAM information to the CPE device.

### BRIEF DESCRIPTION OF THE DRAWINGS/FIGURES

The accompanying drawings, which are incorporated in and constitute part of the specification, illustrate embodiments of the disclosure and, together with the general description given above and the detailed descriptions of embodiments given below, serve to explain the principles of the present disclosure. In the drawings:

FIG. 1A is a schematic diagram of a passive optical network (PON).

FIG. 1B is a block diagram of a conventional optical line terminal (OLT).

FIG. 2A illustrates an Ethernet passive optical network (EPON) wherein a central office and a number of subscribers are coupled together through optical fibers and a passive optical splitter.

FIG. 2B illustrates a passive optical network including a single OLT and multiple ONUs.

FIG. 3 is a diagram of an EPON system including a network power manager in accordance with an embodiment of the present disclosure.

FIG. 4A is a diagram showing the coverage of the IEEE 802.3 standard and the IEEE P1904.1 SIEPON standard in accordance with an embodiment of the present disclosure.

FIG. 4B is a diagram illustrating functions performed by OLT clients in greater detail in accordance with an embodiment of the present disclosure.

FIG. 4C is a diagram illustrating functions performed by ONT clients in greater detail in accordance with an embodiment of the present disclosure.

FIG. 5 shows a block diagram of a system for using SIEPON to implement EEE power management in accordance with an embodiment of the present disclosure.

FIG. 6 is a flowchart of a method for using SIEPON to implement EEE power management in accordance with an embodiment of the present disclosure.

FIG. 7 is a flowchart of a method for using SIEPON to update an EEE interface on an ONU and a CPE device based on gathered information from the CPE device in accordance with an embodiment of the present disclosure.

Features and advantages of the present disclosure will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

In the following description, numerous specific details are set forth to provide a thorough understanding of the disclosure. However, it will be apparent to those skilled in the art that the disclosure, including structures, systems, and methods, may be practiced without these specific details. The description and representation herein are the common means used by those experienced or skilled in the art to most effectively convey the substance of their work to others skilled in the art. In other instances, well-known methods, procedures, components, and circuitry have not been described in detail to avoid unnecessarily obscuring aspects of the disclosure.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

### 1. Overview

Typically, the control policies in the Customer Premise Equipment (CPE) / ONU devices connected to an EPON are pre-programmed into the device. As a consequence of this, the CPE devices have to be custom made for the provider's needs (e.g. to work with original equipment manufacturers (OEMs) / original design manufacturer (ODMs) for these service providers), and users cannot plug and play devices into the network. Further, typically, the control policies cannot be easily managed without the addition of a special control channel, which would entail additional complexity and cost. Once they are programmed into the device, the device is stuck with them. The service provider cannot change the control policies programmed into the custom made access device because control policies for devices within the home are not accessible by the service provider for configuration and/or programming. The service provider has no way to manage an EEE policy on a TV's link plugged into the access link for video on demand (VOD).

Systems and methods according to embodiments of the present disclosure allow the service provider to manage, query and dynamically configure EEE protocols on CPE devices located on the subscriber premises and attached to the ONU that the service provider communicates with to provision services (e.g., set top boxes). By doing this, the service provider can dynamically update the EEE policies based on usage (statistics from the network EEE can be aggregated upwards to the service provider / Central Office (CO) via the SIEPON link), time and provisioned services. Embodiments of the present disclosure enable a service provider to manage EEE policies of CPE devices so that these policies are not limited to policies that typically are pre-programmed onto the CPE devices. A method according to one embodiment uses the SIEPON protocol's operations, administration, management (OAM) functionality to define service provider's specific capability to query, configure and manage the EEE control policies and power management on the network interfaces as well as devices within the network domain. Protocol messages can be exchanged to implement the method.

In addition, the service provider and its partner OEMs can support a protocol rather than specific control policies. This can be further extended for devices that deal with provisioned services, such as video on demand (VOD) services provisioned to a TV with EEE capability. A protocol according to embodiments of the present disclosure enables a service provider to manage the control policy that the TV (and corresponding switches) use, including a configurable level of aggressiveness for power savings and configurable wake times. Additionally, information reagarding usage data and profiles can be sent back up from the CPE devices to the service provider.

Disclosed systems and methods enable a service provider to upgrade control policies dynamically and give service providers access into the EEE domain within a particular home for additional devices / services. Disclosed systems and methods enable a customer to utilize plug and play features of end user equipment. Disclosed systems and methods can also be implemented using, for example, SIEPON systems running over EPON over Cable (EPoC) rather than EPON and/or Data Over Cable Service Interface Specification (DOCSIS) Provisioning of EPON (DPOE) implementations of EPON/SIEPON.

### 2. Passive Optical Network Topology

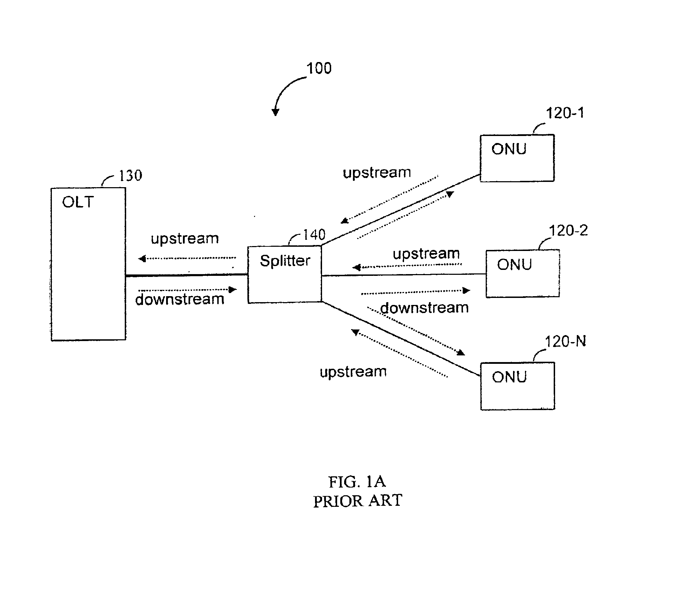

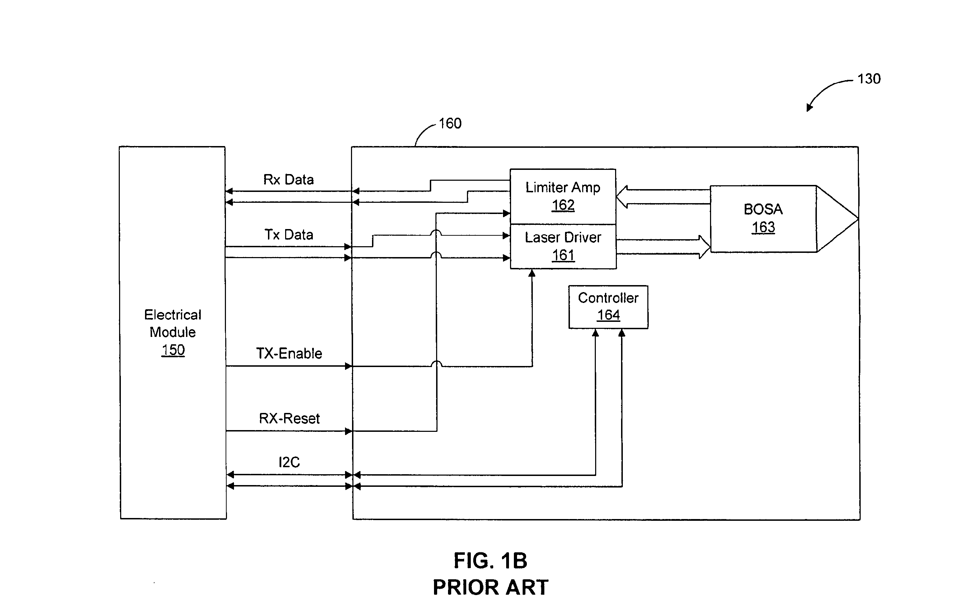

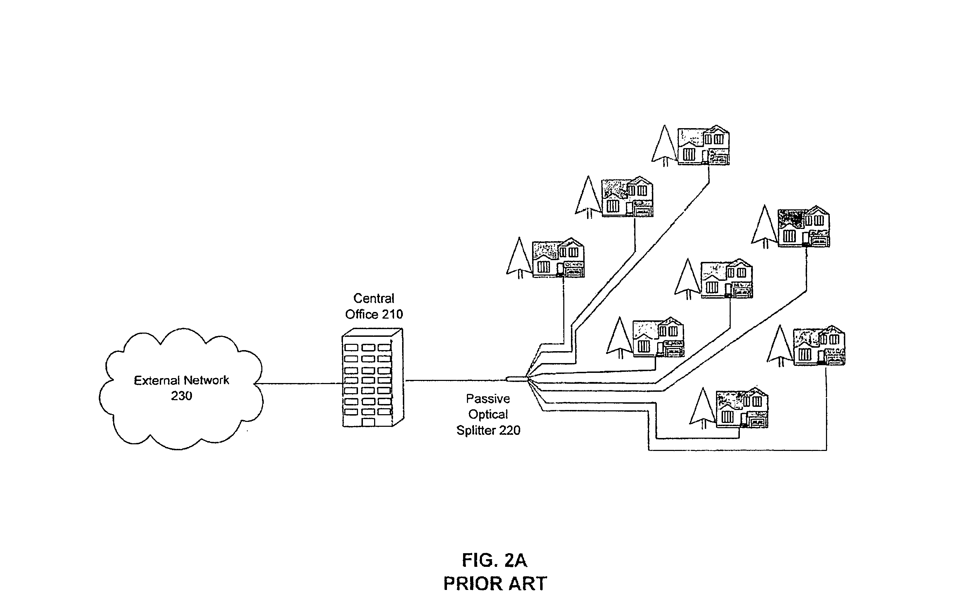

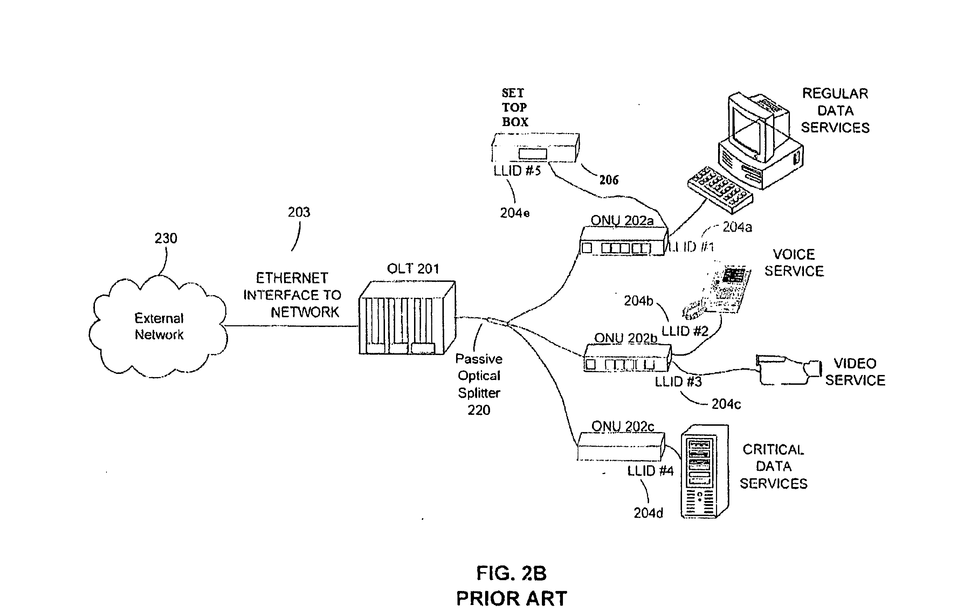

Passive Optical Network (PON) topology will now be described with reference to FIGS. 1 and 2. A PON is a point-to-multipoint network architecture comprising an optical line terminal (OLT) at the service provider and ONUs at subscribers for providing the subscribers with broadband services. New standards have been developed to define different types of PONs, each of which serves a different purpose. For example, the various PON types known in the related art include a Broadband PON (BPON), an Ethernet PON (EPON), ten Gigabit-Ethernet PON (10G-EPON) a Gigabit PON (GPON), ten-Gigabit PON (XG-PONI), next generation PON NGPON2, and others.

An exemplary diagram of a typical PON 100 is schematically shown in FIG. 1. The PON 100 includes N ONUs 120-1 through 120-N (collectively referred to as ONUs 120) connected to an OLT 130 via a passive optical splitter 140 and the optical fiber. In an EPON, for example, traffic data transmission is achieved using two optical wavelengths, one for the downstream direction and another for the upstream direction. Thus, downstream transmission from OLT 130 is broadcast to all ONUs 120. Each ONU 120 filters its respective data according to pre-assigned labels (e.g., LLIDs in an EPON). In an embodiment, splitter 140 is a 1 to N splitter (i.e., a splitter capable of distributing traffic between a single OLT 130 and N ONUs 120).

In most PON architectures, the upstream transmission is shared between ONUs 120 in a time division multiple access (TDMA) based access scheme controlled by OLT 130. TDMA requires that OLT 130 first discovers the ONUs and then measures their round-trip-time (RTT) before enabling coordinated access to the upstream link. With this aim, OLT 130, during a ranging state, tries to determine the range between the OLT 130 and the terminal units (i.e., ONUs 120) to find out at least the RTT between OLT 130 and each of ONUs 120. The RTT of each ONU 120 is necessary in order to coordinate a TDMA based access of all ONUs 120 to the shared upstream link. During a normal operation mode, the range between the OLT 130 to the ONUs 120 may change over time due to temperature changes on the fiber links (which results with varying signal propagation time on the fiber). Thus, OLT 130 continuously measures the RTT and adjusts the TDMA scheme for each ONU accordingly.

As schematically shown in FIG. 1B, OLT 130 (operable, for example, in an EPON) includes an electrical module 150 and an optical module 160. Electrical module 150 is responsible for the processing of received upstream burst signals and generating downstream signals. Electrical module 150 typically includes a network processor and a media access control (MAC) adapter designed to process and handle upstream and downstream signals according to a respective PON standard.

Optical module 160 in most cases is implemented as a small form-factor pluggable (SFP) transceiver that receives optical burst signals sent from ONUs (e.g., ONUs 120) and transmits continuous optical signals to the ONUs. The reception and transmission of signals is over two different wavelengths. For example, in an EPON, in the downstream direction, the optical module 160 generates an optical signal of 1480nm to 1500nm (as referred to 15XY), and, in the upstream direction, optical module 160 receives optical signals between 1260nm and 1360nm.

Optical module 160 includes a laser driver diode 161 coupled to a transmit laser diode that produces optical signals based on the electrical signals provided by laser diode driver 161. Optical module 160 also includes a limiter amplifier 162 coupled to a receive photodiode that produces current in proportion to the amount of light of the optical input burst signal. Limiter amplifier 162 generates two current levels indicating if a received burst signal is '1' or '0' logic value.

The receiver/transmitter optical elements (i.e., a photodiode and laser diode) are realized as a bidirectional optical sub-assembly (BoSa) module 163 that can transmit and receive high rate optical signals. Optical module 160 also includes a controller 164 that communicates with electrical module 150 through the I2C interface and performs tasks related to calibration and monitoring of the transceiver.

OLT vendors typically develop and fabricate electrical module 150 of OLT 130, whereas optical module 160 is often an off-the-shelve transceiver, such as SFP, XFP and the like. Thus, the interface between electrical module 150 and optical module 160 is a standard interface being compatible with any type of SFP transceiver. As illustrated in FIG. 1B, the interface includes wires for receive (RX) data, transmit (TX) data, TX-enabled signal, RX-Reset signal, and I2C for interfacing between electrical module 150 and controller 164. The I2C interface is a relatively slow serial interface with a data rate of up to 4Mb/sec. In contrast, the RX data and TX data interfaces are high speed interfaces where the data rate of signals over these interfaces is similar to the data rate of the PON.

### 2.1 Ethernet Passive Optical Network Topology

Ethernet passive optical networks (EPONs) combine the Ethernet packet framework with PON technology. Hence, they offer the simplicity and scalability of Ethernet with the cost-efficiency and high capacity of passive optics. In particular, due to the high bandwidth of optical fibers, EPONs are capable of accommodating broadband voice, data, and video traffic simultaneously. Furthermore, EPONs are more suitable for Internet Protocol (IP) traffic, since Ethernet frames can directly encapsulate native IP packets with different sizes, whereas ATM passive optical networks (APONs) use fixed-size ATM cells and consequently require packet fragmentation and reassembly.

Typically, EPONs are used in the "first mile" of the network, which provides connectivity between the service provider's central offices and business or residential subscribers. Logically, the first mile is a point-to-multipoint network, with a central office servicing a number of subscribers. A tree topology can be used in an EPON, wherein one fiber couples the central office to a passive optical splitter, which divides and distributes downstream optical signals to subscribers and combines upstream optical signals from subscribers (see FIG. 2A).

Transmissions within an EPON are typically performed between an optical line terminal (OLT) and optical networks units (ONUs) (see FIG. 2B). The OLT generally resides in a central office (e.g., central office 210 in FIG. 2A) and couples the optical access network to the metro backbone, which is typically an external network belonging to an ISP or a local exchange carrier. The ONU can be located either at the curb or at an end-user location, and can provide broadband voice, data, and video services. ONUs are typically coupled to a one by N (1xN) passive optical coupler, where N is the number of ONUs, and the passive optical coupler is typically coupled to the OLT through a single optical link. This configuration can achieve significant savings in the number of fibers and amount of hardware required by EPONs.

Communications within an EPON can be divided into upstream traffic (from ONUs to OLT) and downstream traffic (from OLT to ONUs). In the upstream direction, the ONUs need to share channel capacity and resources, because there is only one link coupling the passive optical coupler with the OLT. In the downstream direction, because of the broadcast nature of the 1xN passive optical coupler, downstream data frames are broadcast by the OLT to all ONUs and are subsequently extracted by their destination ONUs based on their individual Logic Link Identifiers (LLIDs). An LLID carries physical address information for a frame and determines which ONU is allowed to extract the frame.

FIG. 2A illustrates an Ethernet passive optical network (EPON), wherein a central office and a number of subscribers are coupled together through optical fibers and a passive optical splitter. As shown in FIG. 2A, a number of subscribers are coupled to a central office 210 through optical fibers and a passive optical splitter 220. Passive optical splitter 220 can be placed in the vicinity of end-user locations, so that the initial fiber deployment cost is minimized. Central office 210 can be coupled to an external network 230, such as a metropolitan area network operated by an Internet service provider (ISP). Note that although FIG. 2A illustrates a tree topology, an EPON can also be based on other topologies, such as a ring or a bus.

FIG. 2B illustrates an EPON including a single OLT and multiple ONUs. OLT 201 resides in a central office (e.g., central office 210 in FIG. 2A) and is coupled to external network 230 via interface 203. OLT 201 is coupled to ONUs 202 through optical fibers and passive optical splitter 220. As is illustrated in FIG. 2B, an ONU (e.g., any of ONUs 202) can accommodate a number of networked devices, such as personal computers, telephones, video equipment, network servers, etc. One or more networked devices belonging to the same class of service are typically assigned a Logical Link ID (LLID), as defined in the IEEE 802.3 standard. LLIDs 204 can represent, for example, a customer or a service for a customer, or they can be used for some other purpose. A LLID establishes a logical link between an ONU (e.g., any of ONUs 202) and OLT (e.g., OLT 201), and can define specific service level agreement (SLA) requirements. In this example, LLID #1 204a is assigned to regular data services for ONU 202a, LLID #2 204b is assigned to voice services for ONU 202b, LLID #3 204c is assigned to video services for ONU 202b, and LLID #4 204d is assigned to critical data services for ONU 202c. LLID #5 204e is assigned to a set top box 206.

### 2.2 Energy Efficient Ethernet and SIEPON in a PON

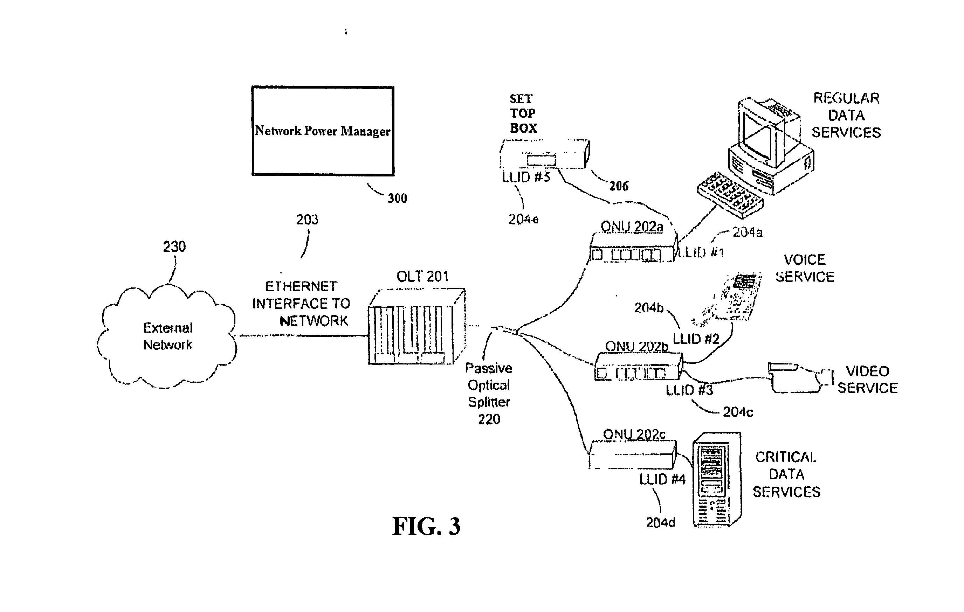

In a conventional PON supporting both Energy Efficient Ethernet (EEE) and SIEPON, there is no uniform power savings control policy supporting both EEE and SIEPON. Instead, an EEE control policy manages energy consumption and efficiency (ECE) between ONUs 202 and CPE devices (e.g., set top box 206), and a SIEPON control policy manages ECE between OLT 201 and ONUs 202. Embodiments of the present disclosure provide systems and methods to enable a service provider to use a unified control policy to dynamically update the EEE control policies at the ONUs 202 and/or the CPE devices based on the SIEPON control policy. In an embodiment, the unified control policy is enforced by a network power manager (NPM). FIG. 3 adds integrated NPM 300 to the topology of FIG. 2B in accordance with an embodiment of the present disclosure. NPM 300 can be implemented, for example, in OLT 201 and/or in one or more of ONUs 202. Alternatively, NPM 300 can be a implemented in a standalone device (e.g., in communication with OLT 202). Power management using EEE and SIEPON will now be described in greater detail. 3. Energy Efficient Ethernet

ECE control mechanisms can be used to control the energy consumption and efficiency of devices. Generally speaking, these ECE mechanisms are designed to reduce energy consumption and improve efficiency while maintaining an acceptable level of performance.

One example of an ECE control mechanism is the IEEE P802.3az standard, also known as Energy Efficient Ethernet (EEE), which is incorporated herein by reference. EEE is an IEEE standard that is designed to save energy in Ethernet networks on a select group of physical layer devices (PHYs). Example PHYs referred to within the EEE standard include the 100BASE-TX and 1000BASE-T PHYs, as well as emerging 10GBASE-T technology and backplane interfaces, such as 10GBASE-KR.

EEE-capable devices can have their ECE features managed by a type of configuration instructions called a control policy. Control policy generation can consider different types of power information (e.g., traffic patterns over time, traffic, performance characteristics, the type and profile of traffic and other relevant information to help decide when to utilize EEE features). Control policy generation may also be determined by looking at hardware subsystem activity as a proxy for actual traffic analysis. Broadly speaking, power information can include any configuration, resource and power usage information for all network hardware, software and traffic that is relevant for ECE optimization.

For example, a control policy for a switch can describe when, and under what circumstances, the switch enters and exits an energy-saving low power state. A control policy may be used to control one or more physical or virtual devices in a system. Control policies (also termed physical control policies or device control policies), for example, add an additional layer of control to EEE capable devices. In an embodiment, one general approach for energy consumption and efficiency efforts is to reduce the power consumed by as many network components/links as possible for as long as possible. To do so, network components/links are put into sleep states or low power states when data is not being transmitted across the network. A signal is periodically transmitted across the link to refresh the receiver at a destination and therefore maintain link activity.

For example, each ONU 202 can use an EEE control policy to control the energy consumption of the EEE ports and to control CPE devices connected to it using those EEE ports. For example, ONU 202a can use an EEE control policy to place a CPE device connected to it (e.g., set top box 206) into a sleep state (or a low power state) when no data is being transmitted to the CPE device. When ONU 202a determines that no data is being transmitted to or from any of the CPE devices connected to it, ONU 202a can also enter a sleep state (or a low power state). The EEE control policy at each ONU can determine how often each ONU enters a sleep state. If power consumption is not managed effectively, unacceptable performance loss in the network can result. For example, each device that is powered down-either into a sleep mode or a low power state-should be awakened within a reasonable time to perform required functions. While CPE devices (e.g., set top box 206) are powered down (e.g., into a sleep mode or a low power state), the corresponding ONU 202 (e.g., ONU 202a) periodically transmits a signal to maintain link activity.

### 4. SIEPON

After the IEEE 802.ah (EPON) standard was approved, various operators developed their own proprietary specifications for higher-layer EPON functions. SIEPON is an umbrella standard that defines a common reference architecture to ensure that EPON preserves a single ecosystem, as opposed to multiple nationally-controlled and/or fragmented ecosystems. The SIEPON project attempts to address, in a consistent and uniform way, the diverse requirements associated with multiple service models, different provisioning and management groups, and various deployment scenarios for EPON.

Because of the difficulty in testing a large number of EPON configurations compliant with SIEPON, SIEPON adopted a "set menu" approach, which groups EPON features into supported packages. For example, an EPON feature can be a generic function or a characteristic of an EPON device, such as a power saving feature. Other SIEPON features include power saving features, trunk and tree protection features, software download features, authentication features, and Internet Group Management Protocol (IGMP) / Multicast Listener Discovery (MLD) features.

A SIEPON profile is a specific implementation or a configuration of a feature. SIEPON power saving profiles include an OLT-driven power-saving mechanism, a power-saving mechanism with support for ONU initiation/response, and/or an OLT-driven power-saving mechanism with multiple sleep cycles. SIEPON profiles are grouped into packages. Each SIEPON package contains a set of profiles that represents a complete specification for interoperable OLTs and ONUs. For example a first package (package A) is a specification targeting the worldwide cable industry aligned with the DOCSIS Provisioning of EPON (DPoE) specification, a second package (package B) is a specification targeting the Japanese incumbent phone operator market aligned with the Nippon Telegraph and Telephone (NTT) specification, and a third package (package C) is a specification targeting the Chinese incumbent phone operator market aligned with the Chinese Telegraph Code (CTC) specification.

In an EPON-based access system, SIEPON includes service interoperability features for the system. These include operations, administration, management (OAM) features for the access link as well as an energy efficiency protocol for that link, which spans the OLT (e.g., OLT 201) and ONU link partners (e.g., ONU's 202). In an actual deployment however, an ONU (e.g., ONU 202a) will be part of a system such as a Customer Premise Equipment (CPE) device, and the CPE device itself will installed at the home or the business of the customer. The CPE device has its own control policies and protocols for energy efficiency.

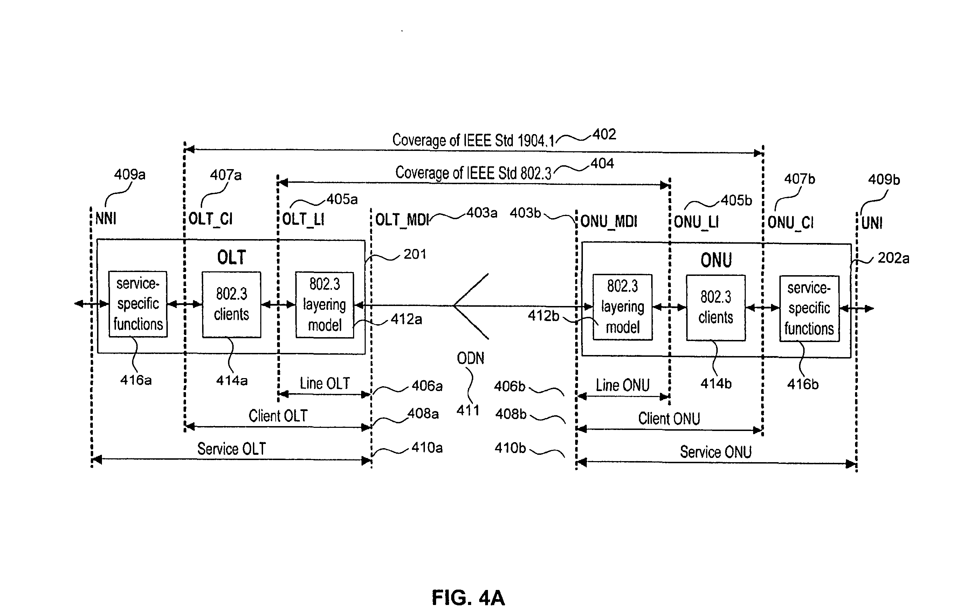

FIG. 4A is a diagram showing the coverage of the IEEE 802.3 standard and the IEEE P1904.1 SIEPON standard. As shown in FIG. 4A, the physical layer, MAC, and link management of EPON are defined by the IEEE 802.3 standard 404. The IEEE P1904.1 SIEPON standard 402 provides services to higher-layer clients. These higher-layer clients include the MAC client, MAC control client, and operations, administration, management (OAM) client of OLT 201 and an ONU 202a communicating over optical data network (ODN) 411. In an embodiment, the clients described herein are software clients that define higher-layer behavior of OLT 201 and ONU 202a and can implemented using one or processors in the respective OLT 201, and ONU 202a. However, it should be understood that, in an embodiment, these clients can also be implemented directly in hardware. By providing services to these clients, SIEPON can be used to control higher-layer behavior of OLTs and ONUs.

As shown by FIG. 4A, functions covered by the IEEE 802.3 standard 404 are designated as line OLT functions 406a and line ONU functions 406b and are performed by the IEEE 802.3 layering model 412. Services covered by the P1904.1 SIEPON standard 402 are designated as client OLT functions 408a and client ONU functions 408b and are performed by IEEE 802.3 clients 414. Service specific functions 416 not covered by either standard are designated as service OLT functions 410a and service ONU functions 410b. Line OLT functions 406a and line ONU functions 406b can be used to send and receive Ethernet frames, including OAM frames, but line OLT functions 406a and line ONU functions 406b cannot perform higher level functions, such as discovery and registration. These higher level functions are performed by OLT clients 414a and ONU clients 414b using client OLT functions 408a and client ONU functions 408b, respectively.

ONU 202a and OLT 201 communicate over ODN 411 and interface with each other over medium dependent interfaces (MDIs) 403a and 403b. OLT clients 414a interface to line OLT functions 406a via line interface OLT-LI 405a (equivalent to the MAC service and OAM service interfaces of IEEE 802.3), and ONU clients 414b interface with line ONU functions 406b via line interface ONU-LI 405b. OLT clients 414a interface with service specific functions 416a via client interface OLT-CI 407a, and ONU clients 414b interface with service specific functions 416b via client interface ONU-CI 407b. OLT service specific functions 416a interface with external network 230 via Network-to-network interface (NNI) 409a, and ONU service specific functions 416b interface with CPE devices (e.g., set top box 206) via user-network interface (UNI) 409b.

### 4.1 OLT Clients

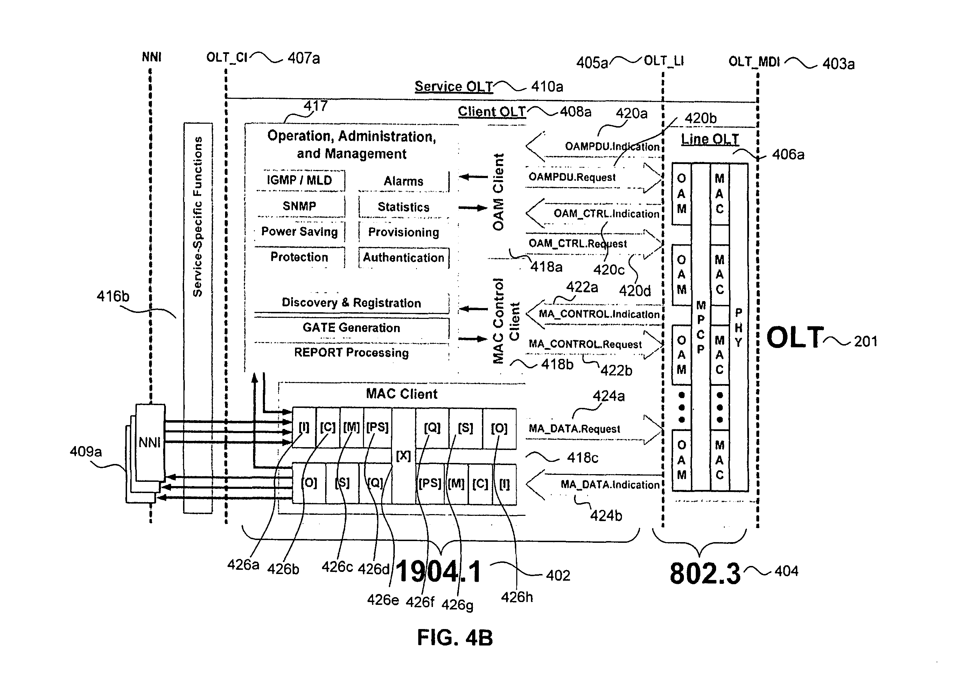

FIG. 4B illustrates OLT clients 414a in greater detail. OLT clients 414a include an OAM client 418a, a MAC control client 418b, and a MAC client 418c. OAM client 418a performs higher-layer OAM functions 417 for line OLT functions 406a, such as functions for: Internet Group Management Protocol (IGMP), Simple Network Management Protocol (SNMP), power saving, protection, alarms, statistics, provisioning, and authentication. MAC control client 418b performs higher-layer MAC control functions for line OLT functions 406a, including functions for: discovery and registration, GATE generation, and REPORT processing. MAC client 418c performs higher-layer MAC client functions for line OLT functions 406a, including functions for: virtual local area network (VLAN) modes, tunneling, multicast, quality of service (QoS) features, buffering, and scheduling.

SIEPON provides a unified provisioning model for the MAC client 418c data path, including functional blocks for: input 426a, classifier(s) 426b, modifier(s) 426c, policer/shaper(s) 426d, cross connecter(s) 426e, queue(s) 426f, scheduler(s) 426g, and output 426h. Input block 426a receives frames from NNI 409a. Classifier block 426b classifies incoming frames by comparing the frame headers to predefined values. Modifier block 426c modifies frame fields by either adding a field, replacing a field, or removing a field of a frame. Policer/shaper block 426d enforces a policy by delaying non-conforming frames (shaping) or marking non-conforming frames to be discarded (policing). Cross-connect block 426d moves frames to an appropriate queue. Queues block 426f holds frames in a queue until the scheduler block 426g is ready to process them. Scheduler block 426g multiplexes frames to output block 426h based on a scheduling algorithm. Output block 426h outputs the frames to an interface (e.g., to OLT-LI 405a). As shown in FIG. 4B, MAC client 418c contains a corresponding sequence of functional blocks for processing data received from line OLT functions 406a that is to be transmitted to external network 230 via NNI 409a.

MAC client 418c, OAM client 418a, and MAC control client 418b can interface with line OLT functions 406a using service primitives. For example, MAC client 418c generates a MA_DATA.Request service primitive 424a when MAC client 418c has data to transmit (e.g., when output block 426h has frames to output). MAC client 418c receives a MA_DATA.Indication service primitive 424b when MAC client receives data to transmit from line OLT functions 406a. Likewise, MAC control client 418b and line OLT functions 406a use MA_CONTROL.Indication service primitives 422a and MA_Control.Request service primitives 422b to send and receive information to each other. OAM client 418a and line OLT functions 406a interface using at least two sets of service primitives. OAM client 418a generates an OAMPDU.Request service primitive 420b and/or an OAM CTRL.Request service primitive 420d when OAM client 418a wants to transmit OAM information to an ONU. OAM client 418a receives OAMPDU.Indication service primitive 420a or OAM_CTRL.Indication service primitive 420c when OAM client 418a receives OAM information from an ONU.

### 4.2 ONU Clients

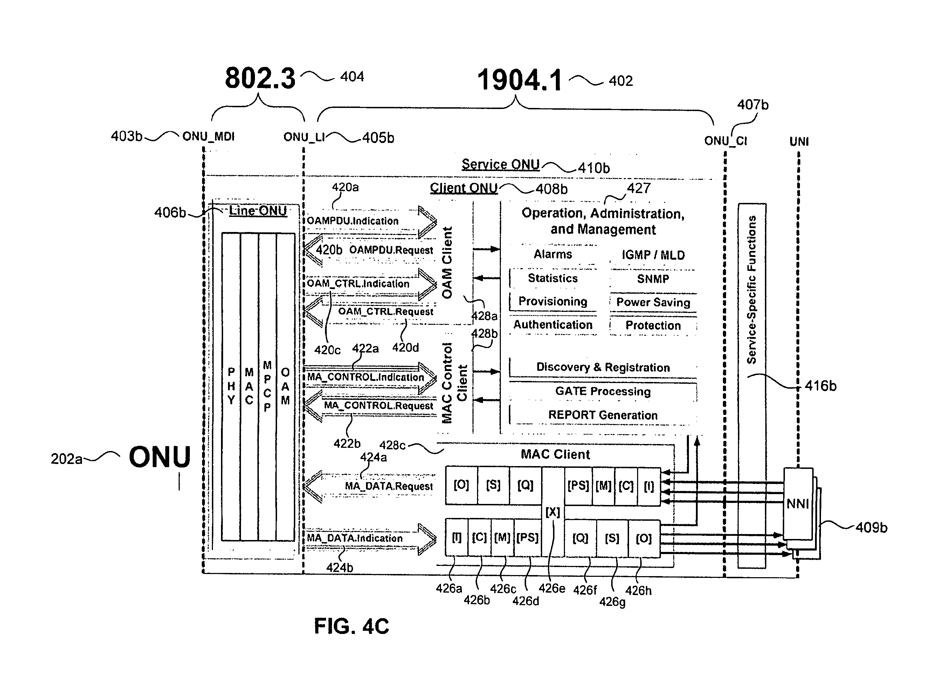

FIG. 4C is a diagram illustrating ONU clients 414b in greater detail. ONU clients 414b include an OAM client 428a, a MAC control client 428b, and a MAC client 428c. OAM client 428a performs higher-layer OAM functions 427 for line ONU functions 406b, such as functions for: Internet Group Management Protocol (IGMP), Simple Network Management Protocol (SNMP), power saving, protection, alarms, statistics, provisioning, and authentication. MAC control client 428b performs higher-layer MAC control functions for line OLT functions 406b, including functions for: discovery and registration, GATE generation, and REPOT processing. MAC client 428c performs higher-layer MAC client functions for line OLT functions 406b, including functions for: virtual local area network (VLAN) modes, tunneling, multicast, quality of service (QoS) features, buffering, and scheduling. MAC client 428c interfaces with CPE devices (e.g., set top box 206) via NNI 409b.

### 4.3 SIEPON Power Management

In an embodiment, OLT 201 enforces an ECE policy to control the energy consumption and efficiency of ONUs 202. For example, if OLT 201 has no data to transmit to ONU 202a, and ONU 202a is not transmitting data to OLT 201, OLT 201 can instruct ONU 202a to go into a sleep mode or a low power mode. If OLT 201 has no data to transmit to any of ONUs 202, and if ONUs 202 are not transmitting data to OLT 201, OLT 201 can go into a sleep mode or a low power mode. Embodiments of the present disclosure provides systems and methods for using SIEPON to not only enforce an ECE control policy on connected ONUs but also on CPE equipment, such as set top box 206.

### 5. Using SIEPON to Implement EEE Power Management

Embodiments of the present disclosure provide systems and methods to use OAM features in SIEPON to define a service provider's specific capability to query, configure and manage EEE control policies and power management on the network interfaces as well as devices within the network domain. For example, an EEE control policy can be used to implement power savings features on devices outside the EPON (e.g., set top box 206 in FIG. 2B). Set top box 206 can be instructed, based on this control policy, how often to sleep, at what traffic level to activate EEE protocols, at which time of day to go into sleep mode, etc. However, devices at home are not necessarily initially configured with these protocols. Embodiments of the present disclosure use SIEPON protocols to reconfigure EEE control policies in set top box 206 (and other user devices).

This allows a service provider (e.g., connected to set top box 206 via external network 230) to have a level of control over the configuration of energy efficiency policies for set top box 206. The service provider can also use SIEPON to query set top box 206 for statistics and behavior and send updates based on gathered information from set top box 206. For instance, if the service provider determined that after months (or some other time period) of operating set top box 206, more energy could be saved by adjusting its control policy (e.g., based on day/night), the service provider could initiate an update to set top box 206 using OAM features. It should be understood that there can be several different types of set top boxes used by an end user. Some set top boxes can be relatively simple with only one setting, and this one setting can be updated. More complex set top boxes can be configured with multiple configurations.

For example, embodiments of the present disclosure enable ONU 202a (or any other ONU 202) to recommend that CPE devices connected to ONU 202a (e.g., set top box 206) to power down when OLT instructs ONU 202a to power down based on the SIEPON policy. Embodiments of the present disclosure also enable ONU 202a to recommend that OLT 201 power down when ONU 202a powers down based on its EEE policy.

### 5.1 Network Power Manager

In an embodiment, a network power manager (NPM) 300 can be used to manage control policies for devices in a network. FIG. 3 adds integrated NPM 300 to the topology of FIG. 2B in accordance with an embodiment of the present disclosure. As described above, conventional approaches to ECE in a network do not provide end to end management of network components. This lack of ECE management is especially important with respect to effecting ECE improvements. In the topology of FIG. 2B, for example, there is no central management of different ECE capabilities, control policies and other power conservation features of different network components.

As should be appreciated, the specific set of power information received, the analysis performed on the power information, and the process of generating configuration instructions based on the power information can be implementation dependent. In an embodiment, NPM 300 can interface with and/or manage OLT clients 414a of FIG. 4B and ONU ONU clients 414b of FIG. 4C. For example, NPM 300 can collect information from ONU 202a and OLT 201. Such information can include, for example: (1) operational characteristics, such as wakeup times, link speeds, buffer sizes, manufacturer, where a device is placed on the network, and configuration options; (2) implemented policy information, such as sleep triggers and buffering requirements; and/or (3) control policy settings, (e.g., how aggressively to enforce low power modes, when to set wake up timers, etc.).

NPM 300 can be placed at any of a number of locations in the EPON topology of FIG. 3 in accordance with embodiments of the present disclosure. For example, in an embodiment, NPM 300 implemented as a module of OLT 201. Alternatively, NPM 300 can be implemented as a module of one or more of ONUs 202. NPM 300 can also be implemented in one or more CPE devices coupled to ONUs 202 (e.g., in set top box 206). NPM 300 can also be implemented as a separate module coupled to OLT 201, ONUs 202, and/or CPE equipment coupled to ONUs 202. Additionally, an EPON system can have a single NPM or multiple NPMs. It should be understood that NPM 300 can be implemented, for example, in hardware or software (or a combination of hardware and software). Additionally, in an embodiment, NPM 300 does not need to be implemented as part of a network component to collect power information and send configuration instructions to the components. For example, in an embodiment, NPM 300 can be implemented in a standalone device in communication with OLT 201 and/or ONU 202a.

### 5.2 Using SIEPON to Update an EEE Configuration of a CPE Device

When a CPE device (e.g., set top box 206) is shipped, typically certain default settings are configured into the CPE device to support EEE functionality. Embodiments of the present disclosure enable a service provider to change these default settings to update the EEE functionality of the CPE device using the OAM of the EPON.

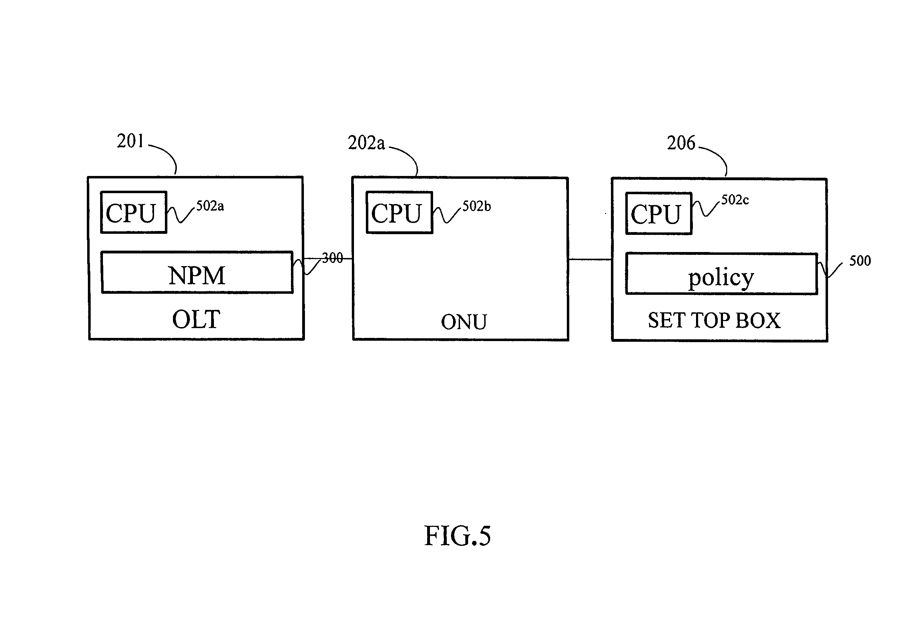

FIG. 5 shows a block diagram of a system for using SIEPON to implement EEE power management in accordance with an embodiment of the present disclosure. In FIG. 5, OLT 201 communicates with ONU 202a over a network link, and set top box 206 is coupled to ONU 202a. In an embodiment, the system of FIG. 5 is an EPON system. However, it should be understood that embodiments of the present disclosure are not limited to EPON. For example, in an embodiment, the system of FIG. 5 can be a EPON over Cable (EPoC) system or a system using Data Over Cable Service Interface Specification (DOCSIS) Provisioning of EPON (DPoE) implementations of EPON/SIEPON.

In an embodiment, set top box 206 is configured with an EEE control policy 500. Control policy 500 can be a single control policy or a collection of several different control policies. EEE control policy 500 can be used to implement power savings features on set top box 206. For example, set top box 206 can be instructed, based on control policy 500, how often to sleep, at what traffic level to activate EEE protocols, at which time of day to go into sleep mode, etc. The service provider providing services to set top box 206 using the system of FIG. 5 can use SIEPON to manage policy 500. In an embodiment, the service provider's central office resides at OLT 201, and the service provider manages policy 500 from OLT 201. However, it should be understood that, in an embodiment, the service provider can also manage policy 500 via ONU 202a and/or external network 230.

Because the IEEE P1904.1 SIEPON standard provides services to higher-layer clients 402, such as OAM client 418a of OLT 201 and OAM client 428a of ONU 202a, SIEPON can be used to control higher-layer OAM behavior of OLT 201, ONU 202a, and set top box 206. The service provider can use SIEPON to instruct OAM client 418a of OLT 201 to send an OAM message to set top box 206 to put set top box 206 into a sleep mode or a low power mode when OLT instructs ONU 202a to be placed into a sleep mode or a low power mode. Thus, embodiments of the present disclosure enable a service provider to set a unified ECE control policy for the whole network managed by the service provider.

In an embodiment, this OAM message is generated in a format that ONU 202a can process. For example, in an embodiment, OLT 201 sends the OAM message to ONU 202a using OAM protocol data units (PDUs). These OAM PDUs can contain control information (e.g., information instructing set top box 206 to be placed into a sleep mode). In an embodiment, to transmit the OAM message from OLT 201 to OLT 202a, OAM client 418 generates a service primitive to request a transfer of OAM PDUs from OLT 201 to ONU 202a. For example, in an embodiment, OAM client 418a generates an OAMPDU.Request service primitive 420b and/or an OAM_CTRL.Request service primitive 420d to transmit OAM PDUs to ONU 202a via line OLT functions 406a. These OAM PDUs can contain OAM power saving PDUs to instruct set top box 206 to change policy 500 to put set top box 206 into a sleep mode or a low power mode if set top box 206 is not currently in use.

Once the OAM PDUs are generated by OAM client 418a, line OLT functions 406a use IEEE 802.3 functionality 404 to transmit these OAM PDUs to ONU 202a. For example, in an embodiment, the OAM PDUs are transmitted to ONU 202a in one or more Ethernet data frames, and ONU 202a subsequently extracts the data frames based on their individual Logic Link Identifiers (LLIDs), which carries physical address information for a frame and determines which ONU is allowed to extract the frame. As shown in FIG. 3, set stop box is assigned LLID 204e, so ONU 202a assigns LLID 204e to the one or more data frames to be transmitted to ONU 202a.

Once ONU 202a receives the data frames, the data frames are sent to OAM client 428a of ONU 202a via service primitives OAMPDU.Indication 420a and/or OAM_CTRL.Indication 420c. The frames are then sent from OAM client 428a to MAC client 428c via OAM functions 427. MAC client 428c can be used to convey the OAM information to set top box 206 to instruct set top box 206 to alter policy 500. As discussed above with respect to OLT 202, MAC client 418c contains a set of functional blocks for processing data to be transmitted. Likewise, MAC client 428c of ONU 202a also contains a set of functional blocks for processing data to be transmitted. Cross-connect block 426d of MAC client 428c moves the frames to the appropriate queue for output across NNI 409b.

Because the frames are assigned LLID 204e, the frames are transmitted by ONU 202a to set top box 206 via NNI 409b. Once set top box 206 receives the frames, set top box 206 alters policy 500 to instruct set top box 206 to go into a sleep mode or a low power mode if set top box 206 is not currently in use.

In an embodiment, the service provider manages policy 500 using NPM 300. However, it should be understood that in an embodiment, the service provider can manage policy 500 without the use of a network power manager. In an embodiment, NPM 300 manages OAM functions 417 of OLT 201 and instructs OLT 201 to send OAM PDUs via OAM client 418a whenever NPM 300 determines that policy 500 should be updated. Additionally, in an embodiment, NPM 300 can manage EEE control policies for a variety of CPE devices coupled to ONUs 202.

In an embodiment, one or more of OLT 201, ONU 202a, and/or set top box 206 can include a processor 502. For example, in an embodiment, processor 502a can process instructions for client OLT functions 408a. Additionally, in an embodiment, processor 502a can process instructions for NPM 300. In another embodiment, NPM 300 has its own dedicated processor. In an embodiment, processor 502b can process instructions client ONU functions 408b. Additionally, in an embodiment, processor 502c can process instructions for set top box 206 and/or policy 500.

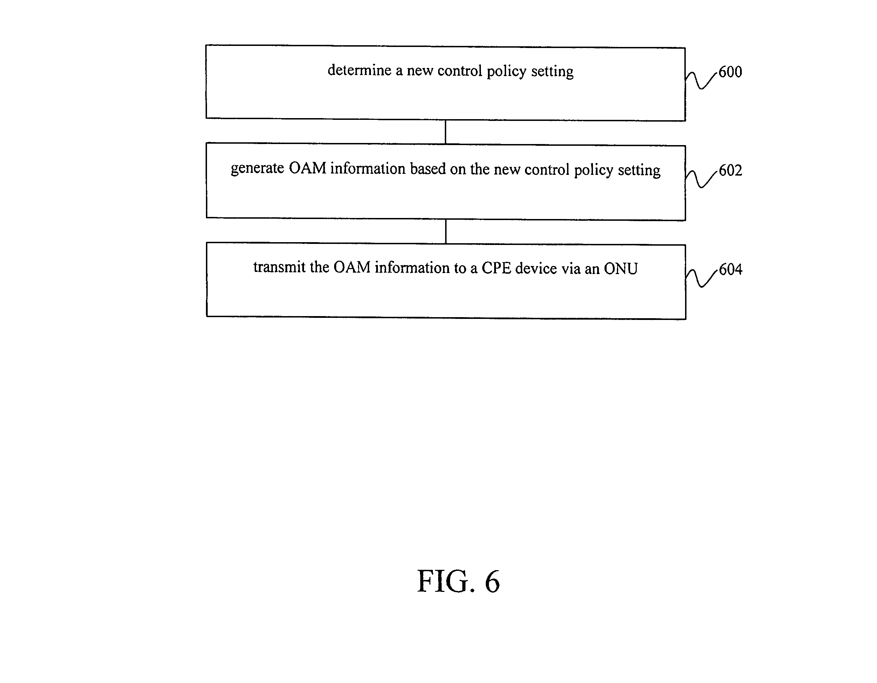

FIG. 6 is a flowchart of a method for using SIEPON to implement EEE power management in accordance with an embodiment of the present disclosure. At step 600, the service provider determines a new control policy setting. For example, in an embodiment, the service provider determines that control policy 500 of set top box 206 should be modified to instruct set top box 206 to go into a sleep mode or a low power mode if set top box 206 is not currently in use. At step 602, OLT 201 generates OAM information based on the new control policy setting. For example, OAM client 418a of OLT 201 generates an OAM PDU for the new control policy setting using OAMPDU.Request service primitive 420b and/or OAM_CTRL.Request service primitive 420d. At step 604, OLT 201 transmits the OAM information to a CPE device via an ONU. For example, OLT 201 transmits the OAM information to ONU 202a, and MAC client 428c of ONU 202a receives the OAM information and transmits one or more frames to set top box 206 instructing set top box 206 to alter policy 500. At step 604, OLT 201 can modify the EEE control policy of ONU 202a and can transmit new EEE control policy instructions to the CPE device.

### 5.3 Using SIEPON to Gather Information from a CPE Device

Embodiments of the present disclosure also enable a service provider to use OAM features in SIEPON to obtain information about behavior patterns of the CPE device so that the service provider can more effectively control the EEE functionality of the device via SIEPON. For example, in an embodiment, the service provider can gather information from set top box 206.

In an embodiment, when ONU 202a goes into a sleep mode or a low power mode based on its EEE control policy, ONU 202a can recommend that OLT 201 also go into a sleep mode or a low power mode. For example, in an embodiment, OAM client 428a of ONU 202a generates an OAMPDU.Request service primitive 420b and/or an OAM_CTRL.Request service primitive 420d to transmit OAM PDUs to OLT 201 via line ONU functions 406b. These OAM PDUs can contain OAM power saving PDUs to recommend that OLT 201 be put into a sleep mode or a low power mode since ONU 202a is not currently in use.

Once the OAM PDUs are generated by OAM client 428a, line OLT functions 406b use IEEE 802.3 functionality 404 to transmit these OAM PDUs to OLT 201. For example, in an embodiment, the OAM PDUs are transmitted to OLT 201 in one or more Ethernet data frames, and OLT 201 subsequently extracts the data frames. Once OLT 201 receives the data frames, the data frames are sent to OAM client 418a of OLT 201 via service primitives OAMPDU.Indication 420a and/or OAM_CTRL.Indication 420c. In an embodiment, OAM client 418a sends the OAM information to NPM 300. The service provider can use the OAM information to determine whether to put OLT 201 into a sleep mode or a low power mode. For example, the service provider may determine not to put OLT 201 into a sleep mode or a low power mode if OLT 201 is still sending or receiving information from another ONU (e.g., ONU 202b).

In an embodiment, the service provider can continually gather OAM information from a plurality of CPE devices on the network. By monitoring power usage of CPE devices, the service provider can dynamically modify EEE policies of CPE devices as customer usage patterns change. In an embodiment, the service provider determines how to gather and manage EEE policy information using NPM 300. However, it should be understood that, in an embodiment, the service provider can gather and manage EEE policy information without using NPM 300.

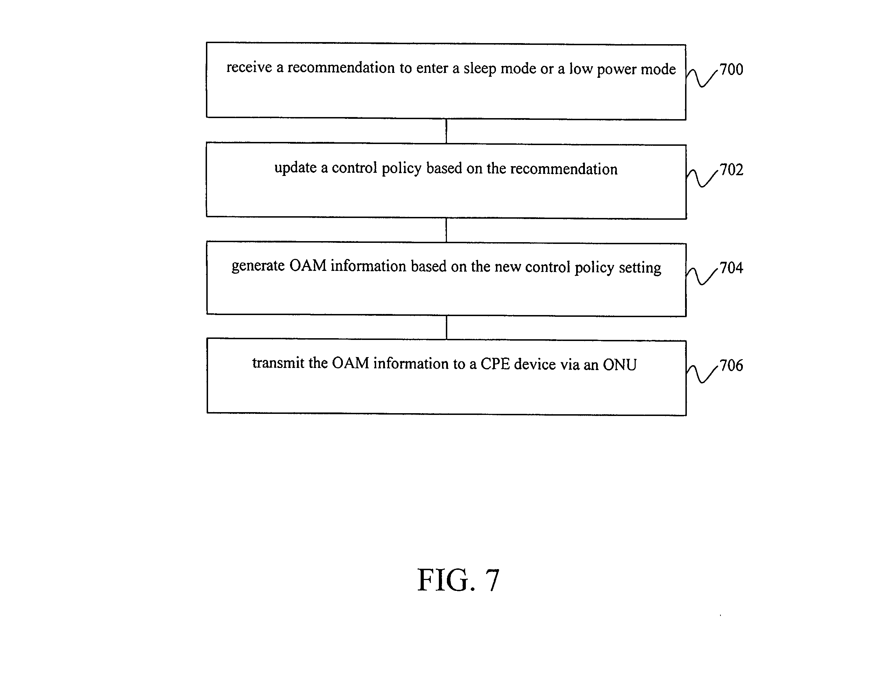

FIG. 7 is a flowchart of a method for using SIEPON to update an EEE interface on an ONU and a CPE device based on gathered information from the CPE device in accordance with an embodiment of the present disclosure. In step 700, OLT 201 receives a recommendation to enter a sleep mode or a low power mode (e.g., from ONU 202a). For example, in an embodiment, ONU 202a sends this recommendation to OLT 201 when ONU 202a enters a sleep mode or a low power mode. At step 702, OLT 201 optionally updates a control policy based on the recommendation. For example, OLT 201 can determine, based on received data from ONUs 202, whether to enter a sleep mode or a low power mode, more or less often. Alternatively, OLT 201 may determine not to change its control policy. At step 704, OLT 201 can generate OAM information based on the new control policy setting. For example, OLT 201 can use its updated control policy to change when it instructs ONU 202a to enter a sleep mode or a low power mode. In step 706, OLT 201 transmits the OAM information to a CPE device (e.g., set top box 206) via an ONU (e.g., ONU 202a).

### 6. Conclusion

It is to be appreciated that the Detailed Description, and not the Abstract, is intended to be used to interpret the claims. The Abstract may set forth one or more but not all exemplary embodiments of the present disclosure as contemplated by the inventor(s), and thus, is not intended to limit the present disclosure and the appended claims in any way.

The present disclosure has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the disclosure that others can, by applying knowledge within the skill of the art, readily modify and/or adapt for various applications such specific embodiments, without undue experimentation, without departing from the general concept of the present disclosure. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The representative signal processing functions described herein can be implemented in hardware, software, or some combination thereof. For instance, the signal processing functions can be implemented using computer processors, computer logic, application specific circuits (ASIC), digital signal processors, etc., as will be understood by those skilled in the art based on the discussion given herein. Accordingly, any processor that performs the signal processing functions described herein is within the scope and spirit of the present disclosure.

The above systems and methods may be implemented as a computer program executing on a machine, as a computer program product, or as a tangible and/or non-transitory computer-readable medium having stored instructions. For example, the functions described herein could be embodied by computer program instructions that are executed by a computer processor or any one of the hardware devices listed above. The computer program instructions cause the processor to perform the signal processing functions described herein. The computer program instructions (e.g. software) can be stored in a tangible non-transitory computer usable medium, computer program medium, or any storage medium that can be accessed by a computer or processor. Such media include a memory device such as a RAM or ROM, or other type of computer storage medium such as a computer disk or CD ROM. Accordingly, any tangible non-transitory computer storage medium having computer program code that cause a processor to perform the signal processing functions described herein are within the scope and spirit of the present disclosure.

While various embodiments of the present disclosure have been described above, it should be understood that they have been presented by way of example only, and not limitation. It will be apparent to persons skilled in the relevant art that various changes in form and detail can be made therein without departing from the spirit and scope of the disclosure. Thus, the breadth and scope of the present disclosure should not be limited by any of the above-described exemplary embodiments, and further the invention should be defined only in accordance with the following claims and their equivalents.

## Claims

1. An apparatus, comprising:
an interface; and
a Service Interoperability in Ethernet Passive Optical Networks (SIEPON) operation, administration, and management (OAM) client, wherein the SIEPON OAM client is configured to:
determine an Energy Efficient Ethernet (EEE) control policy setting for a Customer Premise Equipment (CPE) device,
generate first OAM information based on the EEE control policy setting, and
transmit the first OAM information to the CPE device over the interface.

2. The apparatus of claim 1, wherein the apparatus is implemented on:
an Ethernet Passive Optical Network (EPON),
an EPON over Cable (EPoC) network, or
a Data Over Cable Service Interface Specification (DOCSIS) Provisioning of EPON (DPOE) network.

3. The apparatus of claim 1 or 2, wherein the EEE control policy setting for the CPE device is a setting to place the CPE device in a sleep mode or a low power mode.

4. The apparatus of any preceding claim, wherein the SIEPON OAM client is implemented on an optical line terminal (OLT).

5. The apparatus of any preceding claim, wherein the SIEPON OAM client is further configured to:
receive a recommendation to enter a sleep mode or a low power mode;
update a control policy based on the recommendation;
generate second OAM information based on the updated control policy; and
transmit the second OAM information to the CPE device over the interface.

6. The apparatus of claim 5, wherein the SIEPON OAM client is further configured to:
periodically receive the recommendation to enter the sleep mode or the low power mode;
periodically update the control policy based on the recommendation;
periodically generate the second OAM information based on the updated control policy; and
periodically transmit the second OAM information to the CPE device over the interface.

7. A system, comprising:
a Service Interoperability in Ethernet Passive Optical Networks (SIEPON) operation, administration, and management (OAM) client; and
a network power manager (NPM), wherein the NPM is configured to:
determine an Energy Efficient Ethernet (EEE) control policy setting for a Customer Premise Equipment (CPE) device, and
instruct the SIEPON OAM client to generate first OAM information based on the EEE control policy setting.

8. A method, comprising:
determining an Energy Efficient Ethernet (EEE) control policy setting for a Customer Premise Equipment (CPE) device;
generating, using a Service Interoperability in Ethernet Passive Optical Networks (SIEPON) operation, administration, and management (OAM) client, first OAM information based on the EEE control policy setting; and
transmitting the first OAM information to the CPE device.

9. The method of claim 8, wherein the SIEPON OAM client is implemented on an optical line terminal (OLT).

10. The method of claim 8 or 9, wherein a network power manager (NPM) determines the EEE control policy setting.

11. The method of any of claims 8 to 10, wherein transmitting the first OAM information to the CPE device further comprises transmitting the first OAM information to an optical network unit (ONU), wherein the ONU receives the first OAM information and transmits the first OAM information to the CPE device.

12. The method of any of claims 8 to 11, wherein the EEE control policy setting for the CPE device is a setting to place the CPE device in a sleep mode or a low power mode.

13. The method of any of claims 8 to 12, further comprising:
receiving a recommendation to enter a sleep mode or a low power mode;
updating a control policy based on the recommendation;
generating second OAM information based on the updated control policy; and
transmitting the second OAM information to the CPE device over the interface.

14. The method of claim 13, wherein a network power manager (NPM) updates the control policy based on the recommendation.

15. The method of claim 13 or 14, further comprising:
periodically receiving the recommendation to enter the sleep mode or the low power mode;
periodically updating the control policy based on the recommendation;
periodically generating the second OAM information based on the updated control policy; and
periodically transmitting the second OAM information to the CPE device.
